Europäisches Patentamt

European Patent Office

Office européen des brevets

(11) Veröffentlichungsnummer: **0 508 978 A2**

# EUROPÄISCHE PATENTANMELDUNG

(21) Anmeldenummer: **92890086.9**

(51) Int. Cl.5: **F16B 15/08**

(22) Anmeldetag: **08.04.92**

(30) Priorität: **08.04.91 AT 731/91**

(43) Veröffentlichungstag der Anmeldung:
**14.10.92 Patentblatt 92/42**

(84) Benannte Vertragsstaaten:
**AT BE CH DE DK ES FR GB GR IT LI LU MC
NL PT SE**

(71) Anmelder: **Stich, Friedrich
Promenadensiedlung 18
A-3550 Langenlois(AT)**

(72) Erfinder: **Stich, Friedrich
Promenadensiedlung 18
A-3550 Langenlois(AT)**

(74) Vertreter: **Barger, Werner, Dipl.-Ing. et al
Patentanwälte Barger, Piso & Partner
Biberstrasse 15
A-1010 Wien(AT)**

(54) **Nagel, insbesondere Dachpappennagel.**

(57) Die Erfindung betrifft einen Nagel (2) und besteht darin, daß er aus verstärktem, insbesondere glasfaserverstärktem thermoplastischem Kunststoff besteht und durch Spritzgießen hergestellt ist.

Weiters betrifft die Erfindung ein aus diesen Nägeln hergestelltes magazinierbares Nagelband, ein Verfahren zur Herstellung dieses Bandes mittels Ultraschallschweißung und eine Vorrichtung zur Durchführung des Verfahrens.

Fig.1

EP 0 508 978 A2

Die Erfindung betrifft Nägel, insbesonders zur Befestigung von Dachpappe.

Nägel sind seit undenklichen Zeiten, solche zur Befestigung von Dachpappe seit der Erfindung der Dachpappe, bekannt und wurden in ihrer Form und Größe an die besonderen Einsatzbedingungen angepaßt.

Eine der Hauptunzulänglichkeiten bekannter Dachpappenägel ist es, daß die oberhalb der Dachpappe liegenden, der Witterung ausgesetzten, Nagelköpfe leicht zu korrodieren beginnen. Dies ist unangenehm, da dadurch der Zutritt von Feuchtigkeit im Bereich des Loches durch die Dachpappe möglich wird, was den Hauptzweck der Dachpappeaufbringung, nämlich die Schaffung einer Feuchtigkeitssperre zunichte macht.

Diese Unzulänglichkeit ist auch bei einer ganzen Reihe anderer Anwendungsgebiete nachteilig und macht die Verwendung von Nägeln aus speziellen Legierungen oder mit speziellen Oberflächenbehandlungen Notwendig.

Es ist somit das Hauptziel der Erfindung, einen Nagel zu schaffen, der diesen Nachteil nicht aufweist und der dabei billig herzustellen ist und über ausreichende mechanische Eigenschaften verfügt.

Erfindungsgemäß wird diese Aufgabe dadurch gelöst, daß der Nagelagel aus verstärktem, insbesondere glasfaserverstärktem thermoplastischem Kunststoff besteht und durch Spritzgießen hergestellt wird.

Es hat sich überraschenderweise gezeigt, daß, im Gegensatz zur Ansicht der Fachleute, derartige Nägel für eine Vielzahl von Anwendungen, insbesonders zur Befestigung von Dachpappe, aber auch zur Herstellung von Paletten und zum Zimmern von Schalungen ausreichende mechanische Eigenschaften aufweisen. Dies ist insbesondere deshalb erstaunlich, weil sowohl Fachleute auf dem Gebiet der Nagelherstellung, wie auch Zimmerleute und Kunststoffachleute ein derartiges instinktives Vorurteil gegen diese Idee haben, daß er nie in Erwägung gezogen wurde.

Es sind, insbesonders auf dem Gebiet der Dachpappenagelung, verschiedene Nagelapparate bekannt, die pneumatisch, elektrisch oder auch händisch arbeiten und die das Setzen bzw. Eintreiben der Dachpappenägel erleichtern (siehe EP-A 2 0 321 440). Dazu werden die Nägel magaziniert (siehe US-A-3,083,369), insbesondere entlang zweier Drähte durch punktschweißen in passender Lage zueinander fixiert. Die Nagelvorrichtung bewirkt den Vorschub und beim Setzen des Nagels, dabei, oder beim Einschlagen, reißen die Haltedrähte ab.

Gemäß einer Weiterbildung der Erfindung werden die erfindungsgemäßen Nägel analog zur bekannten Metallvorlage mittels zweier, im wesentlichen lotrecht zur Stiftrichtung verlaufenden, Fäden aus thermoplastischem Material fixiert. Diese Fixierung kann durch Kleben, Schweißen oder ähnliches erfolgen.

Bevorzugt wird diese Verbindung durch Ultraschallschweißen hergestellt.

Eine Ausgestaltung der Erfindung betrifft eine Vorrichtung zur Durchführung dieses Verfahrens.

Thermoplaste durch Verschweißen, auch durch Ultraschallschweißen, miteinander zu verbinden ist, beispielsweise aus der US-A 4,689,100, bekannt.

Bei dieser Vorrichtung werden die Nägel mittels an sich bekannter geschlitzter Zufuhrschienen einer Trommel, die an ihrem Umfang Schlitze, bzw. Nuten aufweist, die entweder in Richtung der Erzeugenden oder geneigt dazu, geradlinig verlaufen, zugeführt. Die Nägel fallen von den Zufuhrschienen in die Schlitze und können in ihrer axialen Lage durch eine Führung oder durch Schrägstellen der Trommel ausgerichtet werden.

Vorteilhafterweise werden zur Erhöhung des Durchsatzes zwei derartige Übergabevorrichtungen vorgesehen, die jeweils jeden zweiten Umfangsschlitz beschicken.

Hinter der zweiten Zufuhrvorrichtung, in Drehrichtung der Trommel gesehen, befindet sich die Zufuhrvorrichtung für die beiden Kunststoffäden, an denen die Nägel befestigt werden. Dabei bewegt sich der Faden durch eine Heizzone, in der er erweicht wird, und umläuft dann einen gekühlten Dorn, wodurch er abgekühlt und in einer vorbestimmten Geometrie fixiert wird. Unmittelbar nach Verlassen des Dornes, der sich vorzugsweise nahe des Trommelumfanges befindet, gelangt der Faden in den Bereich des Ultraschallschweißgerätes, einer sogenannten Sonotrode.

Die Sonotrode ist so angeordnet, daß in Bewegungsrichtung des Fadens, die zumindest im wesentlichen mit der Bewegungsrichtung und auch der Geschwindigkeit nach mit der des des Trommelumfanges übereinstimmt, der zwischen der Trommel und der ihr gegenüberliegenden Sonotrodenoberfläche liegende Spalt sich zunehmend verjüngt.

Bevorzugt ist in der Sonotrodenoberfläche, die zur Trommel gewandt ist, eine rillenartige Vertiefung vorgesehen, durch die der thermoplastische Faden geführt wird, wobei die Tiefe dieser Vertiefung so gering ist, daß der Faden deutlich über die Sonotrodenoberfläche vorsteht. Der Spalt zwischen der Sonotrode und der Trommel ist auch an seiner engsten Stelle so groß, daß auch beim Hindurchbewegen eines Nagelstiftes, der im wesentlichen lotrecht zum Nagelstift verlaufende Faden während des Schweißvorganges nicht völlig durchgeschweißt wird, sondern einen durchgehenden Restquerschnitt aufweist.

Zur Vereinfachung der Justierung werden die beiden thermoplastischen Fäden bevorzugt unabhängig voneinander durch zwei gleiche Vorrichtungen an den Nägeln angeschweißt.

Bevorzugt werden als Fäden Monofilare verwendet, deren Schmelz- bzw. Erweichungstemperatur höher liegt als die des Nagelmaterials. Um das Durchschweißen zu verhindern oder zumindest zu erschweren, kann auch der Faden faser- insbesonders glasfaserverstärkt sein.

In einer Ausgestaltung der Erfindung kann statt der beiden im wesentlichen Kreisquerschnitt aufweisenden Fäden ein Band verwendet werden.

Da den beiden Fäden eine wohldefinierte Ruheform mitgegeben wurde, ist es in der Folge ein Leichtes, die Magazine zu füllen, da die Krümmung der Fäden das Einrollen des Nagelbandes erleichtert. Falls die Nägel in einem Linearmagazin untergebracht werden sollen, wird auf die Umwicklung um den Dorn verzichtet und es wird eine Abkühlung im gestreckten Zustand vorgenommen, um eine von der Lagerung oder Herstellung herrührende Krümmungstendenz zu beseitigen.

Als Material für die Nägel kommen Thermoplaste mit guter Kerbschlagbiegezähigkeit in Frage, die der schlagenden Belastung beim Eintreiben gewachsen sind. Als Verstärkungsmaterial dienen vorzugsweise Glasfasern, doch können für besondere Anwendungsbereiche auch Kohlenstoffasern oder andere Materialien verwendet werden.

Die Fäden bestehen vorzugsweise aus einem Material, das neben seiner guten Schweißbarkeit und der geforderten Schmelz- bzw. Erweichungstemperatur durch den Schlag auf den jeweils vordersten Nagel des Magazins leicht und zuverlässig abtrennbar ist, also über keine zu ausgeprägte Kerbschlagbiegezähigkeit verfügt.

In einer Ausgestaltung der erfindungsgemäßen Vorrichtung ist an der Übergabestelle zwischen den Zufuhrleisten und der Trommel eine Justiereinrichtung nach Art eines kleinen Hammers vorgesehen, die dem jeweils zu vorderst liegenden Nagel im Moment seiner Übergabe von der Schiene auf den Schlitz in der Trommel einen leichten Schlag auf den Nagelkopf verabreicht. Durch diesen Schlag liegt der Nagel mit seiner Kopfunterseite fluchtend mit der Schienenoberseite und es erfolgt die Übergabe in dieser exakt bemessenen Position. Erstaunlicherweise ermöglicht es diese Übergabehilfe, auf eine richtige Schuppung der Nägel in der Zufuhrschiene verzichten zu können.

Unter richtiger Schuppung ist zu verstehen, daß die Köpfe aller Nägel immer richtig oberhalb bzw. unterhalb des Kopfes des vorhergehenden Nagels liegen. Durch die erfindungsgemäße Übergabevorrichtung kann auf das Vorsehen einer aufwendigen und störanfälligen Vorrichtung zur Überprüfung und Korrektur der Schuppung verzichtet werden.

Die Erfindung ist in der beiliegenden Zeichnung in Form eines Ausführungsbeispieles schematisch dargestellt. Dabei zeigt

die Fig. 1 einen Schnitt durch die Trommel in der Ebene eines der zugeführten Fäden;

die Fig. 2 die Sonotrode und ihre Lage zur Trommel in vergrößertem Maßstab;

die Fig. 3 eine perspektivische Ansicht der Sonotrode;

die Fig. 4 einen Schnitt durch die Wirkfläche der Sonotrode quer zum Faden und

die Fig. 5 ein Detail im Bereich der Übergabestelle der Nägel an die Trommel.

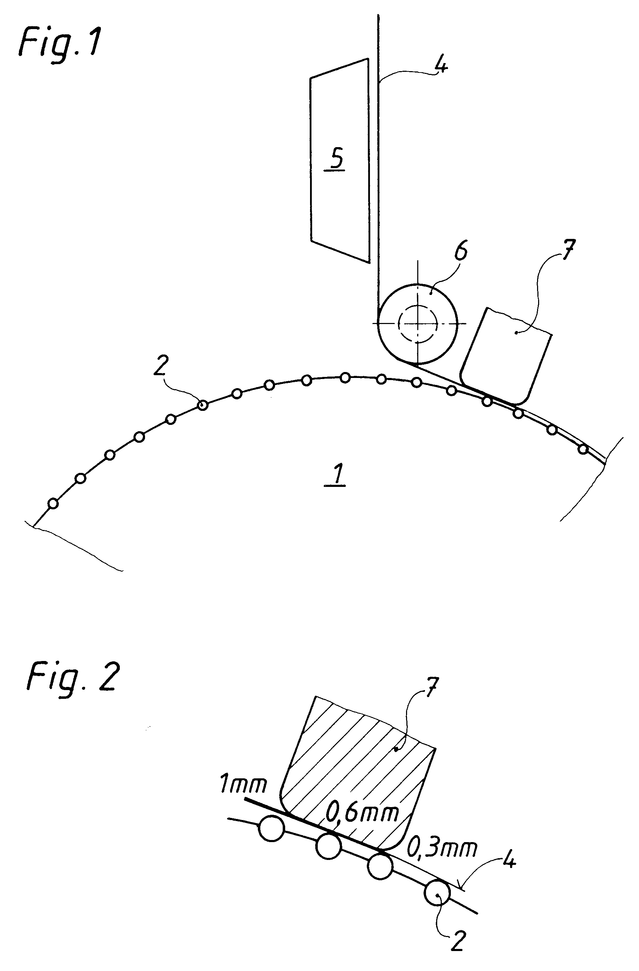

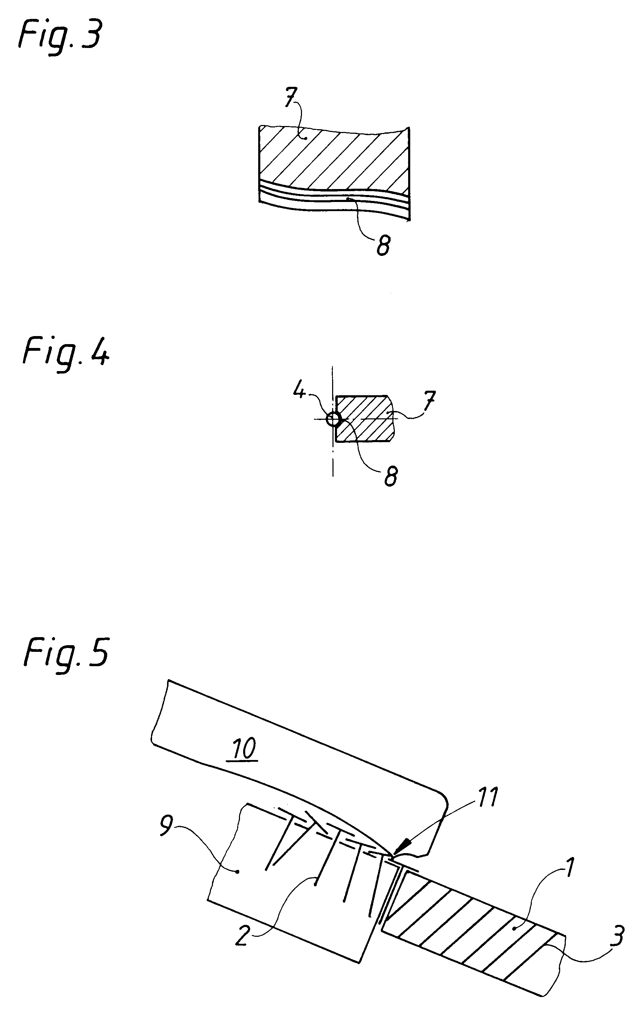

In Fig. 1 ist die Trommel 1 ausschnittsweise dargestellt, an ihrem Umfang sind die Stifte 2 der Nägel in Nuten 3 liegend angeordnet. Diese Nuten 3 verlaufen, wie in Fig. 5 dargestellt, schräg zu den Erzeugenden der zylindrischen Trommel und somit auch schräg zur Trommelachse und weisen daher einen Querschnitt auf, der sich entlang der Nuten etwas verändert. Der Winkel, den die Nuten mit der Erzeugenden einschließen, liegt bevorzugt bei 15°, doch können auch andere Winkel vorgesehen sein.

Der Trommel 1 wird ein monofiler Faden 4 zugeführt, der zuvor an einer Heizung 5 vorbeigeführt wird, um ihn soweit zu erwärmen, daß er plastisch verformbar wird. Nach dem Verlassen des Bereiches der Heizung 5 gelangt der Faden 4 noch im warmen Zustand zu einem Dorn 6, den er entweder, wie dargestellt, entlang eines kurzen Abschnittes seiner Peripherie umläuft oder um den er ein oder auch mehrmals gewunden ist. Dies hängt von der Krümmung ab, die man dem Faden 4 mitgeben möchte und auch von der Temperatur auf die der Dorn 6 gekühlt wird. Diese Kühlung erfolgt am vorteilhaftesten durch ein Kühlmittel, das dem hohlen Dorn 6 durch eine Leitung zugeführt wird, die bis knapp an sein geschlossenes Ende reicht, wodurch entlang des Mantels des Dornes 6 ein im wesentlichen gleichmäßiger axialer Fluß des Kühlmittels erreicht wird.

Der Faden 4 gelangt, nachdem er den Dorn 6 verlassen hat, zu der unmittelbaren neben dem Dorn 6 angeordneten Sonotrode, die bevorzugt die folgende Ausgestaltung aufweist: Die Seite der Sonotrode 7, der der Faden 4 zugeführt wird, dies ist somit die Seite, auf der sich der Dorn 6 befindet, weist von den zuäußerst liegenden Stiftteilen einen Abstand auf, der größer ist als der Abstand, den die andere Seite der Sonotrode zu den Stiftaußenbereichen aufweist. Dies bedeutet, daß der Faden 4 in einen Schlitz gelangt, der sich mit fortschreitender Fadenbewegung für jeden einzelnen Fadenpunkt verengt. Es verbleibt dabei ein Restabstand zwischen Sonotrode und Stift, der sicherstellt, daß der Faden 4 nicht durchgeschweißt wird, sondern daß ein Restquerschnitt an durchgehendem Faden verbleibt.

Bevorzugt weist die Sonotrode 7, wie dies in Fig. 3 gezeigt ist, eine Nut 8 auf, in der der Faden 4 geführt ist. Diese Nut ist dabei, wie in Fig. 4 gezeigt, relativ flach, sodaß der Faden 4 merklich über die Hälfte seines Durchmessers aus dem Sonotrodenkopf ragt.

Die Abmessungen des Spaltes und der Nut hängen naturgemäß vom Durchmesser des Fadens 4 und der Stärke der Stifte 2 ab und können von Fachmann in Kenntnis der Erfindung auf Grund einiger weniger Versuche leicht festgestellt werden. Bewährte Abmessungen für den Spalt, gemessen zwischen der Sonotrode 7 und der Trommel 1 sind 1 mm beim Einlauf, 0,6 mm über den Hauptteil der Sonotrodenlänge und 0,3 mm am Auslaufende der Sonotrode. Dabei wies die Sonotrode eine Nut 8 für den Faden 4 auf, die einen Radius von 0,3 mm hatte.

Je nach der Schrägstellung der Nuten am Trommelmantel und der Richtung des Fadens bezüglich der Normalebene auf die Trommelachse erhält man unterschiedliche Winkel zwischen den Nagelstiften und dem Faden. Übliche Werte, die das Magazinieren erleichtern und nur geringen Raumbedarf haben, liegen bei etwa 15°. Dieser Wert hängt im wesentlichen vom Magazin, in dem das Band verwendet werden soll, aber auch vom Verhältnis Nagelkopfdurchmesser zu Stiftdurchmesser unter Berücksichtigung der Kopfstärke ab.

Fig. 5 zeigt die Übergabestelle zwischen einer Zufuhrleiste 9 für die einzelnen Nägel 2 und der Trommel 1 und ihren Stiftrillen 3. Es ist dabei die vordere Wange der Zufuhrleiste 9 abgenommen, um die Lage der Nägel erkennen zu können. Dabei sind die der Trommel am nächsten liegenden Nägel in einer richtigen (für die Übergabe günstigen) Schuppung eingezeichnet, daran anschließend ist ein Nagel dargestellt, der auf beiden Nachbarnägeln aufliegt. Oberhalb der Leiste 9 ist ein Hammer 10 ersichtlich, dessen Aufschlagfläche 11 auf den trommelfernen Bereich des Nagelkopfes, etwa in der Mitte zwischen Nagelachse und Kopfrand, im Moment der beginnenden Übergabe des Nagels von der Leiste 9 an die Trommel 1 stößt. Dadurch wird der Nagel auf seiner Unterlage (der Oberseite der Leiste 9) ausgerichtet und gelangt in einer wohldefinierten und richtigen Lage zur Rille 3 der Trommel 1. Liegt der Nagel dabei mit seinem Kopf auf dem Kopf des nachfolgenden Nagels auf, wird dieser durch den Schlag abgedrängt und der zu übergebende Nagel gelangt, trotz der ursprünglich falschen Lage, in die richtige Position.

Die Steuerung der Hammerbetätigung erfolgt vorteilhafterweise durch eine auf der Trommel 1 aufgebrachte Nockenscheibe und einen Hebel- oder Federmechanismus.

Die Erfindung ist nicht auf die beschriebenen oder dargestellten Ausführungsbeispiele beschränkt. So kann das Nagel- bzw. Verstärkungsmaterial an den Verwendungszweck angepaßt werden, im Falle der Magazinierung kann das Fadenmaterial nach anderen als den beschriebenen Kriterien ausgewählt werden, die Nagelbandand-Herstellvorrichtung kann anders aufgebaut sein.

Im Falle der der Herstellung von Nägeln für Schalungen kann durch das Spritzgießen eine Sollbruchstelle am Stift vorgesehen sein, durch die das Ausschalen vereinfacht wird. Dadurch ist auch eine Wiederverwendung der Schalbretter leicht möglich.

**Patentansprüche**

1. Nagel, dadurch gekennzeichnet, daß er aus verstärktem, insbesondere glasfaserverstärktem thermoplastischem Kunststoff besteht und durch Spritzgießen hergestellt ist.

2. Magazinierbares Nagelband mit Nägeln nach Anspruch 1, dadurch gekennzeichnet, daß die Nägel (2) mittels zumindest eines Fadens (4) oder Bandes aus thermoplastischem Kunststoff miteinander verbunden sind.

3. Nagelband nach Anspruch 2, dadurch gekennzeichnet, daß das Fadenmaterial eine höhere Erweichungstemperatur aufweist als das Nagelmaterial.

4. Nagelband nach Anspruch 2 oder 3, dadurch gekennzeichnet, daß die Nägel (2) durch Ultraschallschweißung mit dem Faden (4) verbunden sind.

5. Vorrichtung zur Durchführung der Ultraschallschweißung nach Anspruch 4, dadurch gekennzeichnet, daß die Nägel (2) in Nuten (3) am Mantel einer Trommel (1) liegend mittels einer Sonotrode (7) mit dem Faden (4) verschweißt werden, wobei der Faden entlang des Trommelumfanges so geführt wird, daß er bezüglich der Nägel im wesentlichen keine Relativgeschwindigkeit aufweist.

6. Vorrichtung nach Anspruch 5, dadurch gekennzeichnet, daß zwischen Sonotrode (7) und Trommelmantel ein Spalt besteht, der in Bewegungsrichtung des Fadens (4) gesehen, enger wird, an der engsten Stelle aber breiter ist als der über den Trommelumfang vorstehende Stiftabschnitt im Bereich des zu schweißenden Fadens, sodaß der Faden (4) nicht durchgeschweißt wird sondern einen durchgehenden Querschnittsbereich aufweist.

7. Vorrichtung nach Anspruch 5 oder 6, dadurch gekennzeichnet, daß die Sonotrode (7) entlang der Fadenbahn eine Ausnehmung (8) aufweist, in der der Faden (4), teilweise eintauchend, geführt wird.

8.  Vorrichtung nach einem der Ansprüche 5 bis 7, dadurch gekennzeichnet, daß die Nägel (2) der Trommel (1), wie bei der Herstellung von Metallnagelbändern bekannt, mittels mindestens einer geschlitzten Zufuhrleiste (9) zugeführt werden, wobei an der Aufgabestelle ein Hammer (10) vorgesehen ist, der im Moment der Übergabe, in Abhängigkeit von der Winkellage der Trommel, eien leichten Schlag auf den Nagelkopf, etwa in der Mitte zwischen Nagelachse und Kopfrand, in Eintreibrichtung vollführt.

9.  Vorrichtung nach einem der Ansprüche 5 bis 8, dadurch gekennzeichnet, daß jeder Faden (4) vor Erreichen der Trommel (1) folgende Stationen durchläuft:
    a) eine Heizstation (5), in der er zumindest bis in den unteren Bereich seines Erweichungstemperaturbereiches oder bis nahe seiner Schmelztemperatur erwärmt wird,
    b) eine Richtstation (6), auf der er, entsprechend der gewünschten Magazinierungskonfiguration, gebogen und gleichzeitig abgekühlt wird.

10. Vorrichtung nach Anspruch 9, dadurch gekennzeichnet, daß die Richtstation (6) aus einem Rohr passenden Durchmessers besteht, durch dessen Inneres Kühlflüssigkeit fließt und um das der Faden (4) geschlungen ist.

Fig.1

4

5

6

7

2

1

Fig. 2

7

1mm

0,6mm

0,3mm

4

2

Fig.3

7

8

Fig.4

4

7

8

Fig.5

10

11

9

2

1

3